# EUROPEAN PATENT SPECIFICATION

(11) **EP 2 091 658 B1**
(45) Date of publication and mention of the grant of the patent: **04.08.2010**
(21) Application number: 07850680.5
(22) Date of filing: 11.12.2007
(51) Int. Cl.: B05B 5/00, F25D 11/02, F25D 17/04, F25D 17/06

(54) **ELECTROSTATICALLY ATOMIZING UNIT FOR USE IN A TEMPERATURE-REGULATING APPLIANCE**
EINHEIT MIT ELEKTROSTATISCHER ZERSTÄUBUNG ZUR VERWENDUNG IN EINEM TEMPERATURREGELGERÄT
UNITÉ D'ATOMISATION ÉLECTROSTATIQUE DESTINÉE À ÊTRE UTILISÉE DANS UN APPAREIL DE RÉGULATION DE TEMPÉRATURE

(30) Priority: 15.12.2006 JP 2006338879
(43) Date of publication of application: 26.08.2009
(73) Proprietor: Panasonic Electric Works Co., Ltd, Kadoma-shi Osaka 571-8686 (JP)
(72) Inventor: NAKADA, Takayuki, Kadoma-shi Osaka 571-8686 (JP); SUDA, Hiroshi, Kadoma-shi Osaka 571-8686 (JP); MACHI, Masaharu, Kadoma-shi Osaka 571-8686 (JP); YAMAGUCHI, Tomohiro, Kadoma-shi Osaka 571-8686 (JP)
(74) Representative: Appelt, Christian W.
(86) International application number: PCT/JP2007/074192
(87) International publication number: WO 2008/072759

(56) References cited:
- EP-A1- 2 065 097
- WO-A-2006/009189
- WO-A-2006/009190
- JP-A- 2005 296 753
- JP-A- 2007 137 282

## Description

The present invention is directed to an electrostatically atomizing unit used in combination with a temperature-regulating appliance, such as a refrigerator, an air conditioner, or the like appliance, to add a function of generating a mist of charged minute water particles.

### BACKGROUND ART

Japanese patent publication no. 2006-68711 discloses an electrostatically atomizing unit capable of generating a mist of charged minute water particles. The unit is specifically configured to condense water from within an atmosphere and atomize the condensed water into the mist of the charged minute water particles. For this purpose, the atomizing unit includes a cooling means of cooling an emitter electrode so as to condense the water on it, which eliminates a need of providing a tank holding the water and a mechanism of feeding the water from the tank to the emitter electrode. In this regard, the prior atomizing unit can be successfully incorporated in an appliance or vehicle to add the function of generating the mist with an accompanied effect of deodorization and/or sterilization. However, since the unit necessitates cooling module such as realized by a Peltier-effect module to condense the water and supply the water to the emitter electrode, the cooling module itself adds an extra bulk to the appliance when the unit is incorporated in the appliance, especially when the unit is incorporated in the appliance such as a refrigerator or air conditioner inherently equipped with cooling means which could be utilized to cool the emitter electrode.

WO 2006/009190 and WO 2006/009189 disclose all the features of the preamble of claims 1 and 6.

### DISCLOSURE OF THE INVENTION

In view of the above problem, the present invention has been accomplished to provide an electrostatically atomizing unit which is incorporated into a temperature-regulating appliance to add a function of generating a mist of charged minute water particles, yet at a minimum space and cost requirement. The appliance includes a housing configured to have a temperature-regulated space and a cold space divided by a partition, and includes cooling means for cooling the cold space relative to the temperature-regulated space to provide a temperature difference therebetween so as to regulate a temperature of the temperature-regulated space by a cold air from the cold space. The atomizing unit includes an emitter electrode which is configured to condense water thereon from within surrounding air when being cooled. The unit includes a high voltage source which is configured to apply a high voltage to the water on the emitter electrode for electrostatically charging the water and atomizing it into the mist of the charged minute water particles at a front end of the emitter electrode. The emitter electrode is configured to have its front end exposed to the temperature-regulated space and to have its opposite rear end held in heat transfer relation with the cold space through the partition so as to be cooled by the cold space for condensing the water on the emitter electrode. With this arrangement, the atomizing unit can utilize the cold air in the cold space for condensing the water on the emitter electrode, and can dispense with a dedicated cooling system, which enables to add the function of generating the mist to the appliance, yet with a minimum structural and space requirement.

The atomizing unit includes a casing which is configured to accommodate the emitter electrode and the high voltage source. The casing has a front wall and a rear wall spaced from each other, and is mounted on the partition with the rear wall in contact with the partition. The front wall is formed with an outlet for introducing the air from the temperature-regulated space as well as discharging the mist into the temperature-regulated space. The emitter electrode is provided with cooling coupler which projects out through the rear wall into the partition. The cooling coupler can provide a thermal bridge from the cold space to the emitter electrode for effectively cooling the emitter electrode sufficient to condense the water thereon. Thus, the atomizing unit can be easily incorporated in the appliance simply by being mounted on the partition, yet making the best use of the cold air in the appliance for cooling the emitter electrode.

The partition may be partly formed with a reduce-thickness portion which receives the projecting end of the cooling coupler. In this instance, the cooling coupler can have its projecting end close to the cold space for effectively cooling the emitter electrode. The reduced-thickness portion can be realized by a recess formed in the surface of the partition so that the recess can be well utilized to position the atomizing unit on the partition for easy mounting.

Most preferably, the atomizing unit includes an opposed electrode held in an opposite relation with the front end of the emitter electrode, and is connected to receive the high voltage with the emitter electrode being connected to a potential nearer to a ground potential than the opposed electrode. Thus, the partition or the housing of the temperature-regulating appliance can be free from the high voltage to avoid high voltage hazard.

Further, the atomizing unit may additional include a heating jacket which is held in heat transfer relation with the emitter electrode and is configured to heat the emitter electrode. In this connection, the atomizing unit includes a controller which is configured to detect a temperature difference between the cold space and the temperature regulated space and to activate the heating jacket only when the temperature difference exceeds a critical level. Thus, the emitter electrode is protected from being over-cooled, and therefore free from freezing of the water on the emitter electrode, enabling to keep generating the mist.

Alternatively, the emitter electrode is configured to project its rear end out through the ear wall into the partition to establish a heat transfer relation with the cold space through the partition for effectively cooling the emitter electrode to condense the water thereon. In this instance, the emitter electrode is preferred to be surrounded by a cooling jacket which has a larger volume than the emitter electrode to serve as a thermal accumulator in order to keep cooling the emitter electrode at a desired temperature for successively and stably condensing the water.

These and still other advantageous features of the present invention will become more apparent from the following description of a preferred embodiment when taken in conjunction with the attached drawings.

### BRIEF DESCRIPTION OF THE DRAWINGS

FIG. 1 is a schematic sectional view of a refrigerator, a typical one of a temperature regulating appliance which incorporates an electrostatically atomizing unit of the present invention;
FIG. 2 is a sectional view of the electrostatically atomizing unit utilized in the above temperature regulating appliance;
FIG. 3 is a sectional view illustrating a portion of the atomizing unit;
FIG. 4 is a schematic diagram illustrating a mist of charged minute water particles generated by the atomizing unit;
FIG. 5 is a sectional view illustrating a portion of a modified atomizing unit; and
FIG. 6 is a sectional view illustrating a portion of an atomizing unit in accordance with another embodiment of the present invention.

### BEST MODE FOR CARRYING OUT THE INVENTION

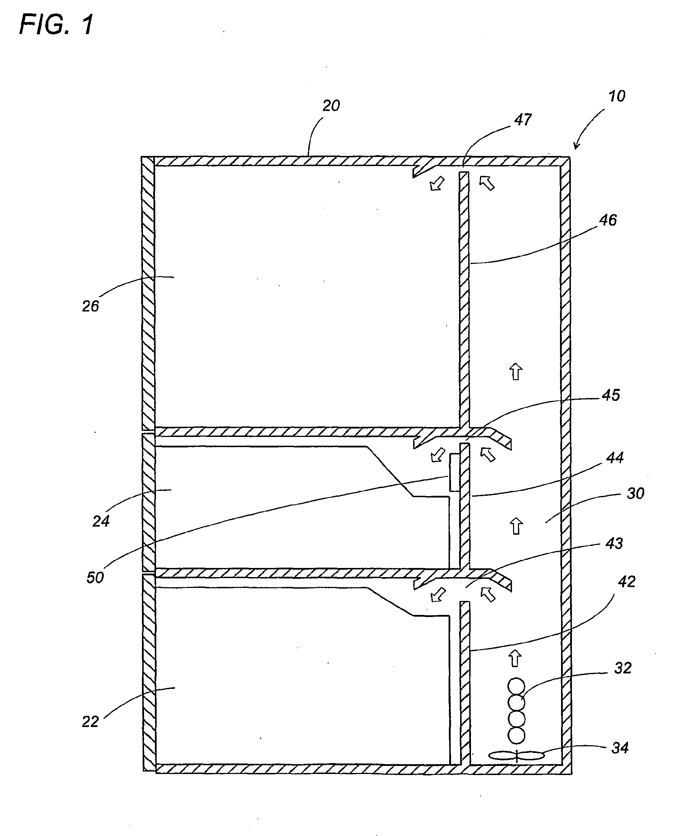

Referring now to FIGS. 1 to 3, there is shown a temperature regulating appliance incorporating an electrostatically atomizing unit **50** of generating a mist of charged minute water particles in accordance with a preferred embodiment of the present invention. In the illustrated embodiment, a refrigerator **10** is shown as a typical example of the appliance inherently equipped with the cooling means of generating a cold air. The present invention is not limited to the use for this particular example, and may be utilized for an air conditioner or the like equipped with the cooling means, and an associated structure with a cold space cooled by the cooling means and at least one temperature regulated space in heat transfer relation with the cold space.

As shown in FIG. 1, the refrigerator **10** includes a housing **20** divided into the cold space **30** and a plurality of temperature-regulated spaces, namely, freezer room **22,** a vegetable storage room **24,** and a fresh room **26.** These rooms are separated respectively by partitions **42, 44,** and **46** from the cold space **30** which is supplied with the cold air generated at a cooling device **32** and is blown by a fan **34.** For example, the cold air generated and flowing in the cold space **30** is maintained at a temperature of -20°C. The cold air is fed into the individual rooms respectively through restricted openings **43, 45,** and **47** for cooling the rooms, for example, the vegetable room **24** to a temperature of +5°C, the freezer room **22** and the fresh room **26** to temperatures of -15°C and +7°C, respectively. In this sense, each of the rooms can be referred to as a temperature regulated space. The atomizing unit **50** is mounted on the partition **44** separating the vegetable room **24** from the cold space **30** to discharge the mist into the vegetable room **24** for deodorizing and/or sterilizing the vegetable room **24** and contents stored therein.

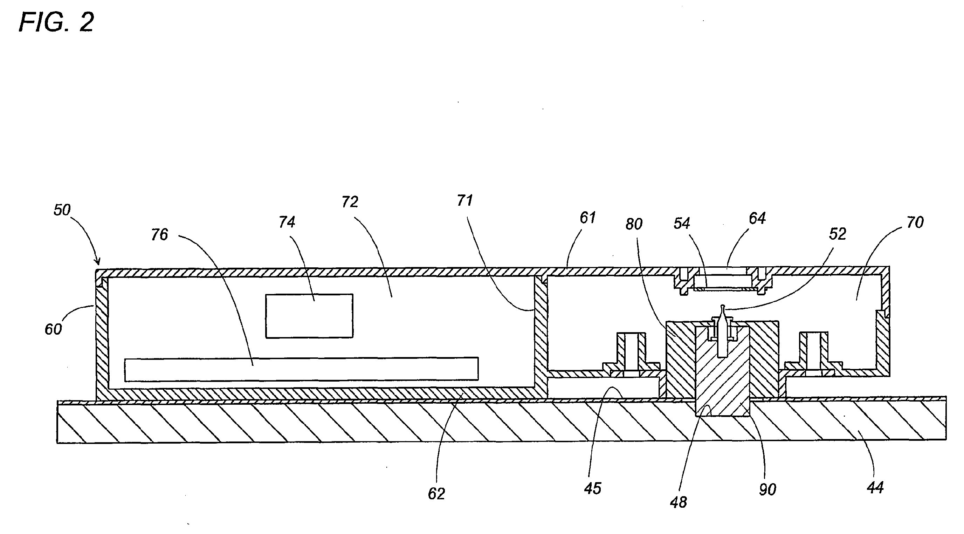

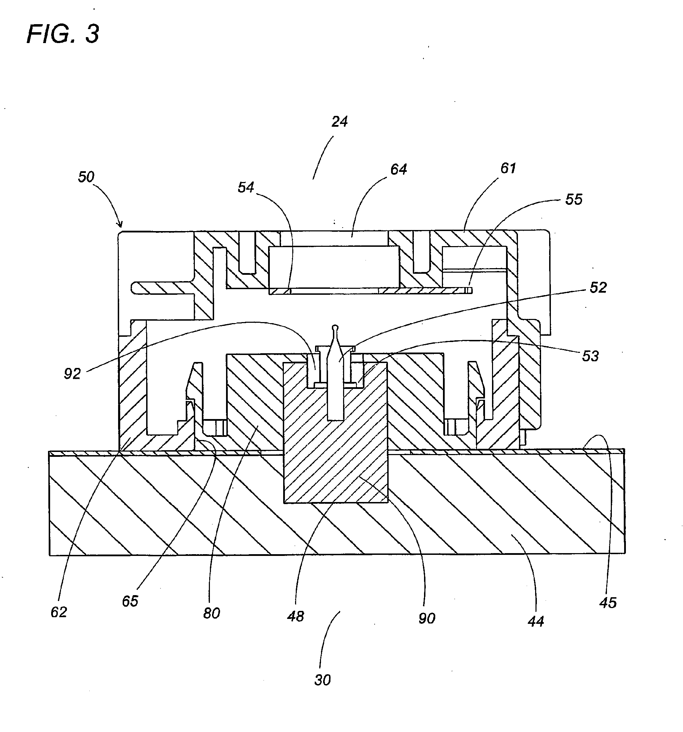

As shown in FIG. 2, the atomizing unit **50** includes a flat rectangular casing **60** with a front wall **61** and a rear wall **62** spaced from each other to define therebetween a mist chamber **70** and a driver chamber **72** which is hermetically closed chamber separated from the mist chamber **70** by a dividing wall **71.** The bottom wall **62** has an opening **65** for detachably receiving a frame **80** which carries an emitter electrode **52** projecting into the mist chamber **70** towards an outlet **64** formed in the front wall **61.** An opposed electrode **54** of ring-shape is supported to the front wall **61** around the outlet **64** in an opposed relation to the front end of the emitter electrode **52.** The casing **60** and the frame **80** are made of a dielectric plastic material, while the emitter electrode **52** and the opposed electrode **54** are made of an electrically conductive metallic material. As best shown in FIG. 3, the emitter electrode **52** has its rear end connected to and surrounded by a cooling coupler **90** which is made of a metal having a good thermal conductivity into a cylindrical shape fitted within the center of the frame **80.** The cooling coupler **90** is formed in its front end with a cavity **92** through with the emitter electrode **52** projects with its rear end embedded into the cooling coupler **90** and with a middle portion being spaced from a side wall of the cavity **92**. The cooling coupler **90** has its rear end projecting out through the rear wall **62** of the casing **60** to establish a thermal bridge between the cold space **30** and the emitter electrode **52** for cooling the emitter electrode **52** by making the use of the cold air flowing in the cold space **30,** thereby condensing water from within surrounding air so as to constantly supply the water on the emitter electrode **52.**

The atomizing unit **50** includes a high voltage source **74** which applies a high voltage between the emitter electrode **52** and the opposed electrode **54** to atomize the water on the emitter electrode **52** into the charged minute water particles and therefore generate the mist of the particles from the front end of the emitter electrode **52** towards and through the opposed electrode **54,** thereby discharging the mist through the outlet port **64** out of the casing **60** into the vegetable room **24.** The high voltage source **74** is controlled by a controller **76** to apply the high voltage at a controlled manner for generating and discharging the mist into the vegetable room **24** continuously or at variable intervals. In this connection, the emitter electrode **52** is fitted with a terminal **53** on the bottom of the cavity **92** for electrical connection with the high voltage source **74,** while the opposed electrode **54** is provided on its outer periphery with a terminal **55** for electrical connection with the high voltage source **74.** The high voltage source **74** and the controller **76** are accommodated within the driver chamber **72** isolated from the mist chamber **70.**

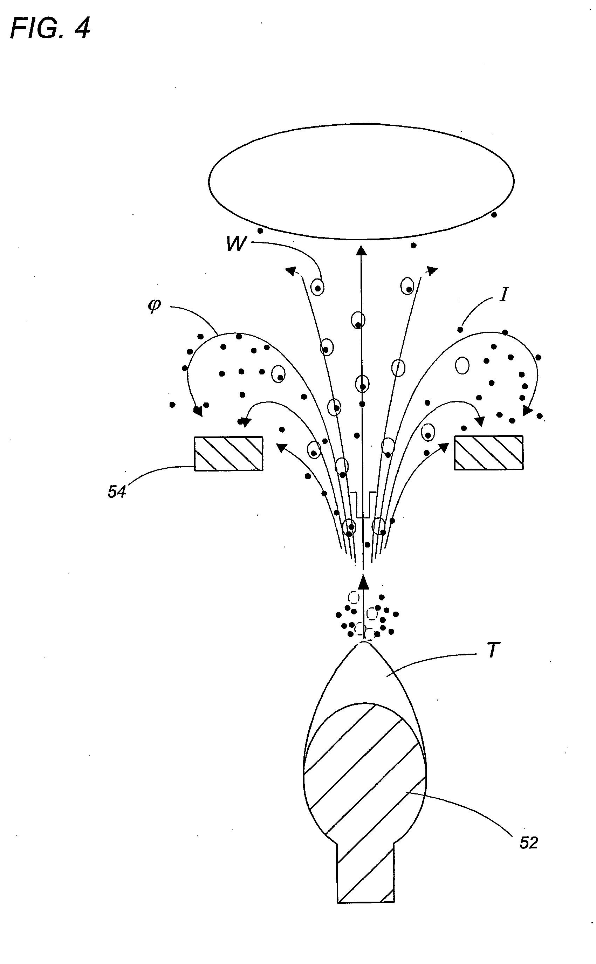

In the present embodiment, the high voltage source **74** is configured to apply 5 kV to the opposed electrode **54** with the emitter electrode **52** being held in a ground potential or 0 V, so as to generate negatively charged minute water particles having a diameter in the order of nanometers at the front end of the emitter electrode **52.** In detail, the high voltage difference causes the water at the tip of the emitter electrode **52** to develop a Taylor cone (T), as shown in FIG. 4. As the Taylor cone develops, the electric charge becomes concentrated to a tip of the cone to thereby further increase electric field strength, which causes the cone to grow further with increased concentration of the charge at the tip of the cone. With this consequence, an increased energy is applied to the tip of the cone to cause Rayleigh disintegration to atomize the cone into the charged minute water particles in the order of nanometers.

Although such high voltage difference also causes the emitter electrode 52 to generate negative ions, the negative ions are inherently of extremely less weight than the charged minute water particles, and can be easily seized by the positively charged opposed electrode **54.** With this result, as schematically shown in FIG. 4, most of the negative ions (I) moving along electric flux lines (ϕ) are adhered on the opposed electrode **54,** allowing only a minimum number of the negative ions to reach the vegetable room **24** and contents (C) stored therein, thus keeping the vegetable room and the contents from being excessively charged, and therefore minimizing an electrostatic shock experienced by a user. On the other hand, the negatively charged minute water particles (W) are driven to move through the opposed electrode **54** because of its relatively large mass and therefore of large inertia force, thereby reaching and adhering on the wall of the vegetable room **24** as well as the contents (C) stored therein for effective deodorization and sterilization.

Turning back to FIGS. 2 and 3, the atomizing unit **50** is mounted on the partition **44** with its rear wall adhered thereto to communicate the outlet **64** with the interior of the vegetable room **24** for introducing the air of the vegetable room **24** into the mist space **70** as well as discharging the mist into the vegetable room **24.** The partition **44** is formed in its surface opposing the vegetable space **24** with a recess **48** which in turn forms a reduced-thickness portion in the partition **44.** The rear end of the cooling coupler **90** is fitted in the recess **48** and comes into a heat transfer relation with the cold space **30** through the reduced-thickness portion so as to establish the thermal bridge between the cold space **30** and the emitter electrode **52.** The depth of the recess **48** is selected to give an optimum temperature difference between the cooling coupler **90** and the cold space **30** sufficient for cooling the emitter electrode **52** while keeping an intended thermal insulation between the cold space **30** and the vegetable room **24.** However, it may be possible to project the rear end of the cooling coupler **90** into the cold space **30** for direct heat transfer relation to the cold air in the cold space **30,** where the emitter electrode **52** is not cooled excessively by the cold air, i.e., cooled to a temperature of freezing the water on the emitter electrode **52.** The partition **44** is made of a thermally insulating material and is covered with a sheath **45** except at the recess **48..**

As shown in FIG. 3, the cooling coupler **90** is shaped to have a larger volume or thermal capacity than the emitter electrode **52** so as to keep cooling the emitter electrode for successive condensation of the water thereon. The water is condensed on a middle portion of the emitter electrode **52** exposed in the cavity **92** of the cooling coupler **90** and on the front end projecting from the cooling coupler **90.** The middle portion is confined by the side wall of the cavity **90** in a spaced relation therefrom and can be cooled also from the surrounding wall of the cavity **92.** The high voltage source **74** and the controller **76** are isolated away from the cooling coupler **90,** and accommodated within the driver chamber **71** separated from the mist chamber **70** so as to be protected from the mist as well as being cooled, and therefore being made moisture-free for reliable electrical operation over a long period of use.

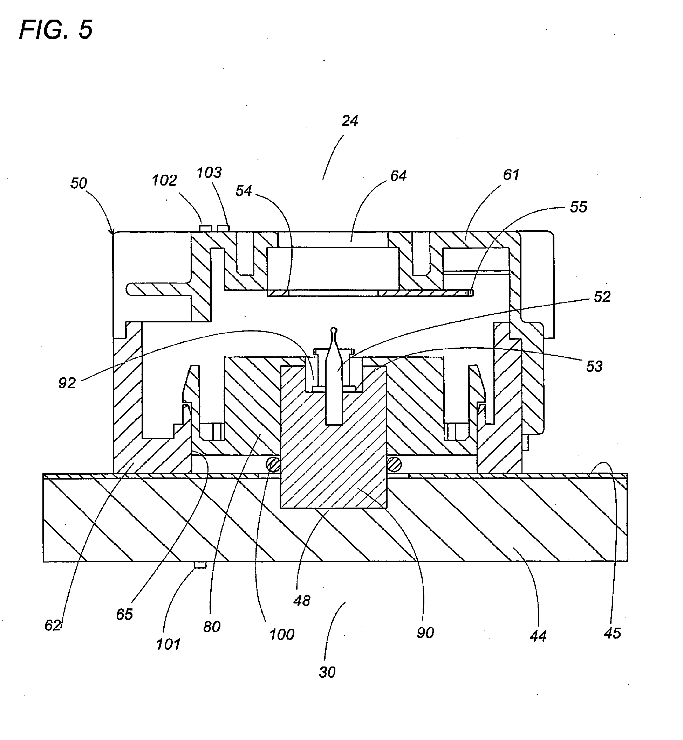

FIG. 5 shows a modification of the atomizing unit which is additionally provided with a heating jacket **100** disposed on the rear end of the frame **80** to surround the cooling coupler **90** between the partition **44** and the frame **80.** The other configurations are identical to the above embodiment. Therefore, like parts are designated by like reference numerals, and no duplicate explanation is made herein. The heating jacket **100** is introduced to heat the cooling coupler **90** when the cooling coupler **90** is over-cooled to such an extent of condensing excessive amount of water or freezing the water on the emitter electrode **52.** For this purpose, the atomizing unit **50** includes a first temperature sensor **101** provided on the partition **44** for sensing temperature of the cold space **30,** a second sensor **102** and a humid sensor **103** respectively provided on the front wall **61** for sensing temperature and humidity of the vegetable room **24.** Outputs of these sensors are received at the controller **76** which is configured to determine an optimum temperature to which the emitter electrode **52** is cooled for condensing sufficient amount of water to generate the mist successfully, and to keep the temperature of the cooling coupler **90** around the optimum temperature by activating the heating jacket **100.**

During the operation of the refrigerator, it is likely that the temperature and humidity of the vegetable room **24** vary due to frequent door opening and/or varying environment. As a result, there may sometimes occur a considerable temperature difference between the cold space **30** and the vegetable room **24** which would cause excessive cooling of the emitter electrode **52** to condense excessive amount of water or even freeze the water. When this occurs, i.e., the temperature difference exceeds a critical level, the controller **76** responds to activate the heating jacket **100** so as to heat the emitter electrode **52** to the optimum temperature, thereby enabling to keep generating the mist successfully. The optimum temperature and the critical level are constantly updated at the controller **76** in consideration of varying temperatures of the cold space **30** and the vegetable room **24,** and also relative humidity of the vegetable room **24.**

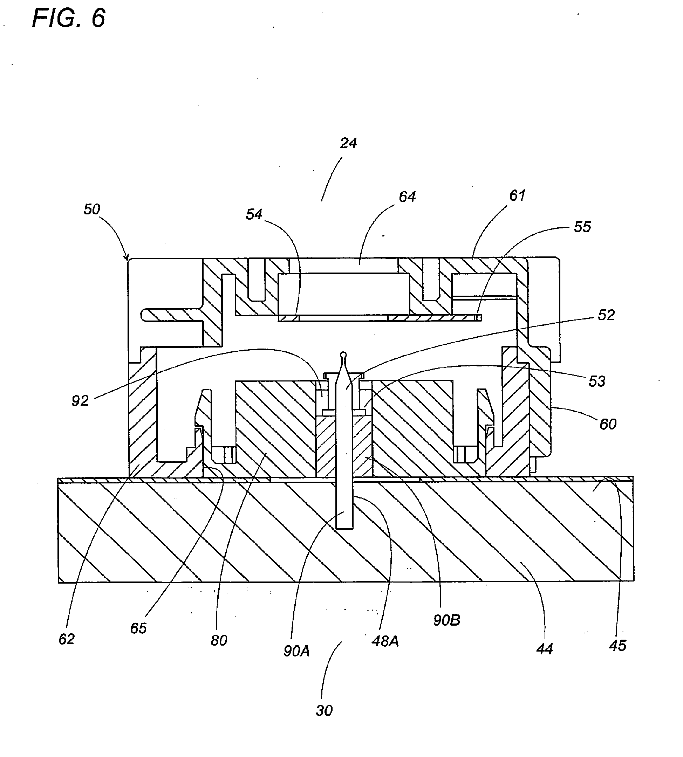

FIG. 6 shows an atomizing unit **50** in accordance with a second embodiment of the present invention which is identical to the above embodiment except that the emitter electrode **52** is elongated to define at its rear end the cooling coupler **90A.** The like parts are designated by like reference numerals, and no duplicate explanation is deemed necessary. The emitter electrode **52** extends through a cooling jacket **90B** held within the frame **80** to have its front end project out of the frame **80.** The rear end of the emitter electrode **52,** i.e., the cooling coupler **90A** projects out of the cooling jacket **90B** and the bottom wall **62** of the casing **60** into an associated recess **48A** in the surface of the partition **44** for establishing a heat transfer relation with the cold space **30** through the reduced-thickness portion of the partition **44.** The cooling jacket **90B** is made of a heat conductive metallic material into a cylindrical shape surrounding the emitter electrode **52** within the frame **80** or within the casing **60.** Thus, the emitter electrode **52** is cooled by the cold air in the cold space to condense the water thereon for generating the mist of the charged minute water particles. In this embodiment, the cooling jacket **90B** has a larger volume than the emitter electrode to serves as a thermal accumulator for effectively cooling the emitter electrode **52.** The present embodiment may be modified to include the heating jacket **100** and the associated control as mentioned in the above.

In the above embodiments and modification, the high voltage source **74** is preferred to apply the high voltage to the opposed electrode **54** with the emitter electrode **52** being connected to the ground potential or near ground potential in order to keep the housing **20** of the appliance free from the high voltage. However, it may be possible to apply the high voltage to the emitter electrode **52** relative to the opposed electrode **54,** for example, + 5 kV to the emitter electrode with the opposed electrode being connected to the ground potential, provided that sufficient electrical insulation is made between the emitter electrode and the housing of the appliance. In this instance, the condensed water is atomized into positively charged minute water particles which are discharged in the form of a mist in the vegetable room, i.e., the temperature-regulated space, while at the same time positive discharged from the emitter electrode are entrapped by the opposed electrode of the ground potential to avoid the electrostatic shock, as is discussed with reference to FIG. 4.

## Claims

1. A temperature-regulating appliance (10) equipped with cooling means (32) and an electrostatically atomizing unit (50),
said appliance (10) being configured to have a temperature-regulated space (24) and a cold space (30) divided by a partition (44), said temperature-regulated space (24) being configured to have its temperature regulated by an air from said cold space (30) cooled by said cooling means (32), said atomizing unit (50) comprising:
an emitter electrode (52) being configured to condense therein water from within the surrounding air when being cooled;
a high voltage source (74) being configured to apply a high voltage to the water on said emitter electrode (52) to electrostatically charge the water for atomizing it into a mist of charged minute water particles;
wherein
said emitter electrode (52) is configured to have its front end exposed to said temperature-regulated space (24) and to have its opposite rear end held in heat transfer relation with said cold space (30) through said partition (44) so as to be cooled by said cold space (30) for condensing the water on said emitter electrode (52),
wherein
said atomizing unit (50) comprises a casing (60) having a front wall (61) and a rear wall (62) spaced from each other, and being mounted at its rear wall (62) on said partition (44); said front wall (61) being formed with an outlet (64) for introducing the air from said temperature-regulated space (24) and discharging said mist into said temperature-regulated space (24), **characterized in that** said casing (60) is configured to accommodate the emitter electrode (52) and the high voltage source (74), and said emitter electrode (52) being provided with a cooling coupler (90) which projects out through said rear wall (62) into said partition (44).

2. A temperature-regulating appliance as set forth in claim 1, wherein said partition (44) is formed partly with a reduced-thickness portion (48) which receives a projecting end of said cooling coupler (90).

3. A temperature-regulating appliance as set forth in claim 2, wherein said partition (44) is formed in its surface with a recess (48) which defines said reduced-thickness portion.

4. A temperature-regulating appliance as set forth in claim 1, wherein said atomizing unit (50) includes an opposed electrode (54) held in an opposite relation with the front end of said emitter electrode (52); said high voltage source (74) being connected to apply the high voltage across said emitter electrode (52) and said opposed electrode (54) with said emitter electrode (52) being connected to a potential nearer to a ground potential than said opposed electrode (54).

5. A temperature-regulating appliance as set forth in claim 1, wherein said emitter electrode (52) is held in heat transfer relation with a heating jacket (100) which is configured to heat said emitter electrode (52), said atomizing unit (50) includes a controller (76) which is configured to detect a temperature difference between said cold space (30) and said temperature regulated space (24) and activate said heating jacket (100) only when said temperature difference exceeds a predetermined threshold.

6. A temperature-regulating appliance (10) equipped with cooling means (32) and an electrostatically atomizing unit (50),
said appliance (10) being configured to have a temperature-regulated space (24) and a cold space (30) divided by a partition (44), said temperature-regulated space (24) being configured to have its temperature regulated by an air from said cold space (30) cooled by said cooling means (32); said atomizing unit (50) comprising:
an emitter electrode (52) being configured to condense therein water from within the surrounding air when being cooled;
a high voltage source (74) being configured to apply a high voltage to the water on said emitter electrode (52) to electrostatically charge the water for atomizing it into a mist of charged minute water particles;
wherein
said emitter electrode (52) is configured to have its front end exposed to said temperature-regulated space (24) and to have its opposite rear end held in heat transfer relation with said cold space (30) through said partition (44) so as to be cooled by said cold space (30) for condensing the water on said emitter electrode (52);
wherein
said atomizing unit (50) comprises a casing (60) having a front wall (61) and a rear wall (62) spaced from each other, and being mounted at its rear wall (62) on said partition (44), said front wall (61) being formed with an outlet (64) for introducing the air from said temperature-regulated space (24) and discharging said mist into said temperature-regulated space (24), **characterized in that** said casing (60) is configured to accommodate the emitter electrode (52) and the high voltage source (74), and said emitter electrode (52) being configured to project its rear end out through said rear wall into said partition (44).

7. An temperature-regulating appliance (10) as set forth in claim 6, wherein said emitter electrode (52) is surrounded by a cooling jacket (90A), said cooling jacket (90A) having a larger volume than said emitter electrode (52) and being disposed within said casing (60).

## Patentansprüche

1. Eine temperaturregulierende Vorrichtung (10) ausgerüstet mit Kühlmittel (32) und einer elektrostatischen Zerstäubungseinrichtung (50), wobei die Vorrichtung (10) ausgebildet ist, um einem temperaturregulierten Bereich (24) und einen gekühlten Bereich (30), die durch eine Abtrennung (44) getrennt sind, aufzuweisen, wobei der temperaturregulierte Bereich (24) ausgebildet ist, um seine Temperatur durch Luft von dem gekühlten Bereich (30), der durch das Kühlmittel (32) gekühlt wird, zu regulieren, wobei die Zerstäubungseinrichtung (50) umfasst:
eine Emitterelektrode (52), die ausgebildet ist, um daran Wasser von einer umgebenden Luft zu kondensieren, wenn sie gekühlt wird;
eine Hochspannungsversorgung (74), die ausgebildet ist, um eine Hochspannung an das Wasser auf der Emitterelektrode (52) anzulegen und das Wasser elektrostatisch aufzuladen, um es in einem Nebel von geladenen winzigen Wasserteilchen zu zerstäuben;
wobei die Emitterelektrode (52) ausgebildet ist, um ihre Vorderseite dem temperaturregulierten Bereich (24) auszusetzen und ihre Rückseite über die Abtrennung (44) in einem wärmeleitfähigem Zustand mit dem gekühlten Bereich (30) zu halten, um so durch den gekühlten Bereich (30) für das Kondensieren des Wassers auf der Emitterelektrode (52) gekühlt zu werden,
wobei die Zerstäubereinrichtung (50) ein Gehäuse (60) mit einer Vorderwand (61) und einer Rückwand (62), die voneinander getrennt sind, aufweist und mit ihrer Rückwand (62) an der Abtrennung (44) angebracht ist, wobei die Vorderwand (61) mit einem Auslass (64) für das Einführen der Luft von dem temperaturregulierten Bereich (24) und für das Freilassen des Nebels in dem temperaturregulierten Bereich (24) ausgebildet ist,
**dadurch gekennzeichnet, dass**
der Behälter (60) ausgebildet ist, um die Emitterelektrode (52) und die Hochspannungsversorgung (74) unterzubringen, und die Emitterelektrode (52) mit einem Kühlkoppler (90) ausgerüstet ist, wobei der Kühlkoppler (90) die Rückwand (62) passierend in die Abtrennung (44) hineinragt.

2. Temperaturregulierte Vorrichtung nach Anspruch 1, wobei die Abtrennung (44) teilweise mit einem Bereich reduzierter Dicke (48) ausgebildet ist, an dem ein Überstand des Kühlkopplers (90) koppelt.

3. Temperaturregulierende Vorrichtung nach Anspruch 2, wobei die Abtrennung (44) an ihrer Oberfläche mit einer Ausnehmung (48) geformt ist, die den Bereich reduzierter Dicke definiert.

4. Temperaturregulierende Vorrichtung nach Anspruch 1, wobei die Zerstäubereinheit (50) eine Gegenelektrode (54) aufweist, die mit der Vorderseite der Emitterelektrode (52) in einer entgegengesetzten Relation gehalten wird, wobei die Hochspannungsversorgung (74) ausgebildet ist, um eine Hochspannung zwischen der Emitterelektrode (52) und der Gegenelektrode (54) auszubilden, wobei die Emitterelektrode (52) an einem Potential, das näher dem Massepotential als das von der Gegenelektrode (54) ist, gehalten wird.

5. Temperaturregulierende Vorrichtung nach Anspruch 1, wobei die Emitterelektrode (52) in einem Wärmefluss mit einem Heizmantel (100) steht, wobei der Heizmantel (100) ausgebildet ist, um die Emitterelektrode (52) zu erhitzen, wobei die Zerstäubereinheit (50) einen Controller (46) umfasst, der ausgebildet ist, um eine Temperaturdifferenz zwischen dem gekühlten Bereich (30) und dem temperaturregulierten Bereich (24) zu detektieren und um den Heizmantel (100) nur dann zu aktivieren, wenn die Temperaturdifferenz einen vorbestimmten Schwellenwert überschreitet.

6. Temperaturregulierende Vorrichtung (10), die mit Kühlmittel (32) und einer elektrostatischen Zerstäubungseinrichtung (50) ausgerüstet ist, wobei die Vorrichtung (10) ausgebildet ist, um einen temperaturregulierten Bereich (24) und einen gekühlten Bereich (30), die durch eine Abtrennung (44) voneinander getrennt sind, aufweist, wobei der temperaturregulierte Bereich (24) ausgebildet ist, um seine Temperatur durch Luft von dem gekühlten Bereich (30) zu regulieren, wobei der gekühlte Bereich (30) durch das Kühlmittel (32) gekühlt ist;
die Zerstäubungseinrichtung (50) umfassend:
eine Emitterelektrode (52), die ausgebildet ist, um daran Wasser aus einer umgebenden Luft im Falle einer Kühlung zu kondensieren;
eine Hochspannungsquelle (74) die ausgebildet ist, um eine Hochspannung an das Wasser der Emitterelektrode (52) anzulegen und das Wasser für die Zerstäubung in einen Nebel von geladenen winzigen Wasserteilchen elektrostatisch aufzuladen;
wobei die Emitterelektrode (52) ausgebildet ist, um ihre Vorderseite dem temperaturregulierten Bereich (24) zuzuwenden und um ihre Rückseite in einem wärmeleitfähigen Zustand mit dem gekühlten Bereich (30) durch die Abtrennung (44) zu halten, um so durch den gekühlten Bereich (30) gekühlt zu werden und so das Wasser auf der Emitterelektrode (52) zu kondensieren, wobei die Zerstäubereinheit (50) ein Gehäuse (60) mit einer Vorderwand (61) und einer Rückwand (62), die voneinander separiert sind, aufweist und mit seiner Rückwand (62) an der Abtrennung (44) angeordnet ist und die Vorderwand (61) mit einem Auslass (64) ausgebildet ist, um Luft aus dem temperaturregulierten Bereich (24) einzulassen und Nebel in dem temperaturregulierten Bereich (24) auszulassen;
**dadurch gekennzeichnet, dass**
das Gehäuse (60) ausgebildet ist, um die Emitterelektrode (52) und die Hochspannungsversorgung (74) unterzubringen und die Emitterelektrode (52) ausgebildet ist, um mit ihr rückwärtiges Ende durch die Rückwand in die Abtrennung (44) hineinzuragen.

7. Temperaturregulierende Vorrichtung (10) nach Anspruch 6, wobei die Emitterelektrode (52) von einen Kühlmantel (90A) umgeben ist, wobei der Kühlmantel (90A) ein größeres Volumen als die Emitterelektrode (52) aufweist und in dem Gehäuse (60) angeordnet ist.

## Revendications

1. Appareil de régulation de température (10) équipé de moyens de refroidissement (32) et d'une unité d'atomisation électrostatique (50),
ledit appareil (10) étant configuré pour avoir un espace régulé en température (24) et un espace froid (30) divisés par une séparation (44), ledit espace régulé en température (24) étant configuré pour avoir sa température régulée par de l'air provenant dudit espace froid (30) refroidi par lesdits moyens de refroidissement (32), ladite unité d'atomisation (50) comportant :
une électrode d'émetteur (52) configurée pour condenser dans celle-ci de l'eau provenant de l'intérieur de l'air ambiant en étant refroidie,
une source de tension élevée (74) configurée pour appliquer une tension élevée à l'eau sur ladite électrode d'émetteur (52) afin de charger électrostatiquement l'eau pour l'atomiser en un brouillard de minuscules particules d'eau chargées,
dans lequel ladite électrode d'émetteur (52) est configurée pour avoir son extrémité avant exposée audit espace régulé en température (24) et pour avoir son extrémité arrière opposée maintenue en relation de transfert thermique avec ledit espace froid (30) par l'intermédiaire de ladite séparation (44) de manière à être refroidie par ledit espace froid (30) pour condenser l'eau sur ladite électrode d'émetteur (52),
dans lequel ladite unité d'atomisation (50) comporte un boîtier (60) ayant une paroi avant (61) et une paroi arrière (62) espacées l'une de l'autre, et étant monté au niveau de sa paroi arrière (62) sur ladite séparation (44), ladite paroi avant (61) étant formée munie d'une sortie (64) pour introduire l'air provenant dudit espace régulé en température (24) et pour évacuer ledit brouillard dans ledit espace régulé en température (24), **caractérisé en ce que** ledit boîtier (60) est configuré pour recevoir l'électrode d'émetteur (52) et la source de tension élevée (74), et ladite électrode d'émetteur (52) étant munie d'un coupleur de refroidissement (90) qui fait saillie à l'extérieur à travers ladite paroi arrière (62) dans ladite séparation (44).

2. Appareil de régulation de température tel qu'exposé dans la revendication 1, dans lequel ladite séparation (44) est formée en partie avec une partie à épaisseur réduite (48) qui reçoit une extrémité en saillie dudit coupleur de refroidissement (90).

3. Appareil de régulation de température tel qu'exposé dans la revendication 2, dans lequel ladite séparation (44) est formée dans sa surface avec un évidement (48) qui définit ladite partie à épaisseur réduite.

4. Appareil de régulation de température tel qu'exposé dans la revendication 1, dans lequel ladite unité d'atomisation (50) inclut une électrode opposée (54) maintenue dans une relation opposée à l'extrémité avant de ladite électrode d'émetteur (52), ladite source de tension élevée (74) étant raccordée pour appliquer la tension élevée entre ladite électrode d'émetteur (52) et ladite électrode opposée (54), ladite électrode d'émetteur (52) étant raccordée à un potentiel plus proche d'un potentiel de masse que ladite électrode opposée (54).

5. Appareil de régulation de température tel qu'exposé dans la revendication 1, dans lequel ladite électrode d'émetteur (52) est maintenue en relation de transfert thermique avec une chemise de chauffage (100) qui est configurée pour chauffer ladite électrode d'émetteur (52), ladite unité d'atomisation (50) inclut une commande (76) qui est configurée pour détecter une différence de température entre ledit espace froid (30) et ledit espace régulé en température (24) et activer ladite chemise de chauffage (100) uniquement lorsque ladite différence de température dépasse un seuil prédéterminé.

6. Appareil de régulation de température (10) équipé de moyens de refroidissement (32) et d'une unité d'atomisation électrostatique (50),
ledit appareil (10) étant configuré pour avoir un espace régulé en température (24) et un espace froid (30) divisés par une séparation (44), ledit espace régulé en température (24) étant configuré pour avoir sa température régulée par de l'air provenant dudit espace froid (30) refroidi par lesdits moyens de refroidissement (32), ladite unité d'atomisation (50) comportant :
une électrode d'émetteur (52) configurée pour condenser dans celle-ci de l'eau provenant de l'intérieur de l'air ambiant en étant refroidie,
une source de tension élevée (74) configurée pour appliquer une tension élevée à l'eau sur ladite électrode d'émetteur (52) pour charger électrostatiquement l'eau afin de l'atomiser en un brouillard de minuscules particules d'eau chargées,
dans lequel ladite électrode d'émetteur (52) est configurée pour avoir son extrémité avant exposée audit espace régulé en température (24) et pour avoir son extrémité arrière opposée maintenue en relation de transfert thermique avec ledit espace froid (30) par l'intermédiaire de ladite séparation (44) de manière à être refroidie par ledit espace froid (30) pour condenser l'eau sur ladite électrode d'émetteur (52),
dans lequel ladite unité d'atomisation (50) comporte un boîtier (60) ayant une paroi avant (61) et une paroi arrière (62) espacées l'une de l'autre, et étant monté au niveau de sa paroi arrière (62) sur ladite séparation (44), ladite paroi avant (61) étant formée munie d'une sortie (64) pour introduire l'air provenant dudit espace régulé en température (24) et évacuer ledit brouillard dans ledit espace régulé en température (24), **caractérisé en ce que** ledit boîtier (60) est configuré pour recevoir l'électrode d'émetteur (52) et la source de tension élevée (74), et ladite électrode d'émetteur (52) étant configurée pour faire saillir son extrémité arrière vers l'extérieur à travers ladite paroi arrière dans ladite séparation (44).

7. Appareil de régulation de température (10) tel qu'exposé dans la revendication 6, dans lequel ladite électrode d'émetteur (52) est entourée d'une chemise de refroidissement (90A), ladite chemise de refroidissement (90A) ayant un volume plus grand que ladite électrode d'émetteur (52) et étant disposée à l'intérieur dudit boîtier (60).
